# EUROPÄISCHE PATENTANMELDUNG

(11) **EP 1 652 898 A2**
(43) Veröffentlichungstag der Anmeldung: **03.05.2006**
(21) Anmeldenummer: 05023478.0
(22) Anmeldetag: 27.10.2005
(51) Int. Cl.: C09D 11/16, C09D 5/22

(54) **Permanente Markierung von lackierten Oberflächen sichtbar durch Bestrahlung mit UV-Licht**

(30) Priorität: 02.11.2004 DE 202004017747 U; 28.09.2005 DE 202005015345 U
(71) Anmelder: Wleschendorf, Michael, 23564 Lübeck (DE); Schmidt, Karsten, 23562 Lübeck (DE)
(72) Erfinder: Wleschendorf, Michael, 23564 Lübeck (DE); Schmidt, Karsten, 23562 Lübeck (DE)
(74) Vertreter: Ahrens, Gabriele

(57) **Zusammenfassung**

Die vorliegende Erfindung betrifft eine permanente Markierung zur dauerhaften Kennzeichnung von lackierten Oberflächen, wobei die Markierung bei Tageslicht unsichtbar ist und erst durch Bestrahlung mit UV-Licht sichtbar wird.

## Beschreibung

Die vorliegende Erfindung betrifft eine permanente Markierung von lackierten Oberflächen, wie zum Beispiel von Fahrzeugteilen, die für das bloße Auge bei Tageslicht nicht sichtbar ist und erst durch Bestrahlung mit bestimmten Lichtquellen sichtbar wird.

Ein Problem der heutigen Zeit ist die stetige Zunahme des Diebstahls von Fahrzeugen aller Art wie von Kraftfahrzeugen, Fahrrädern etc.

Zur eindeutigen Identifizierung weisen diese Fahrzeuge zwar Registrier- oder Identifikationsnummem auf, die im Allgemeinen in nicht sichtbare Fahrzeugteile eingeprägt sind, wie zum Beispiel Fahrgestellnummern und Motornummern. Werden diese mechanisch entfernt oder geändert, ist eine eindeutige Identifizierung des Fahrzeuges beziehungsweise seines ehemaligen Besitzers nicht mehr möglich. Die so anonymisierten Fahrzeuge werden dann wieder verkauft.

Darüber hinaus befinden sich diese Nummem an vergleichsweise unzugänglichen Stellen des Fahrzeugs und sind daher nicht ohne Weiteres nachprüfbar.

Es besteht daher ein Bedarf, die Fahrzeuge zur Sicherung und eindeutigen Identifizierung mit Kennzeichnungen zu versehen, die mit dem bloßen Auge nicht ohne Weiteres sichtbar sind, sich jedoch an vergleichsweise zugänglichen Stellen des Fahrzeugs befinden und mit geeigneten Mitteln leicht erkennbar gemacht werden können.

So ist bekannt, lackierte Fahrzeugoberflächen mit Farben zu kennzeichnen, die für das bloße Auge nicht sichtbar sind und zum Beispiel erst durch Bestrahlung mit bestimmten Lichtquellen, wie zum Beispiel UV-Licht sichtbar werden.
Die bekannten Verfahren weisen jedoch den Nachteil auf, dass sich die Farbe nicht dauerhaft mit der Oberfläche verbindet und verhältnismäßig einfach entfernt werden kann.

Die vorliegende Erfindung betrifft eine permanente Markierung zur Kennzeichnung von lackierten Oberflächen, wobei die Markierung durch eine fluoreszierende Substanz gebildet ist, die bei Tageslicht unsichtbar ist, und erst durch Bestrahlung mit UV-Licht sichtbar wird, und die dauerhaft mit dem Lack verbunden ist.

Da sich die erfindungsgemäße Lackierung dauerhaft mit dem Lack verbindet, kann die erfindungsgemäße Markierung allenfalls durch Abschleifen des Lackes entfernt werden.
Dies bedeutet jedoch eine Beschädigung der lackierten Oberfläche. Eine Beschädigung der lackierten Oberfläche beeinträchtigt das Erscheinungsbild und damit den Wert des Fahrzeuges beziehungsweise macht eine neue Lackierung erforderlich, was umständlich ist.

Die erfindungsgemäße Markierung eignet sich insbesondere zur Sicherung von Fahrzeugen. Aufgrund einer mittels der erfindungsgemäßen Markierung aufgebrachten Registriernummer kann zum Beispiel eine Autoversicherung ein Fahrzeug einwandfrei zuordnen, selbst wenn Fahrgestellnummer und Motomummer geändert worden sind.

Weiter umfasst die Erfindung ein Mittel zur Markierung von lackierten Oberflächen mit der erfindungsgemäßen permanenten Markierung, wobei das Mittel eine Lösung einer fluoreszierenden Substanz in einem geeigneten Lösungsmittel ist, insbesondere einer Nitroverdünnung oder Aceton oder ähnlichem.

Die vorliegende Erfindung umfasst auch ein Kit zum Aufbringen der permanenten Markierung auf eine lackierte Oberfläche umfassend das erfindungsgemäße Mittel zur Markierung von lackierten Oberflächen, eine Vorrichtung zum Aufbringen des erfindungsgemäßen Mittels auf die lackierte Oberfläche sowie gegebenenfalls eine Schablone mit einer Lochung entsprechend der gewünschten Markierung.

Weiter umfasst die vorliegende Erfindung die Verwendung des Mittels oder des Kits zum Aufbringen einer permanenten Markierung auf lackierte Oberflächen, insbesondere lackierte Oberflächen von Fahrzeugen wie Kraftfahrzeugen, Rädern etc.

Die erfindungsgemäße Markierung wird mit einem speziellen Mittel auf dem Lack aufgebracht, das eine Lösung einer fluoreszierenden Substanz in einem Lösungsmittel ist, das mit der lackierten Oberfläche unter Anlösen des Lacks reagiert, wie einer Nitroverdünnung, Aceton oder ähnlichen Lösungsmittel oder auch Mischungen derartiger Lösungsmittel.

Als fluoreszierende Substanz können zum Beispiel Lumineszenzpigmente oder ähnliche eingesetzt werden. Geeignete Beispiele hierfür sind Lumineszenzpigmente auf Basis von Benzthiazolderivaten. Als besonders geeignet hat sich das von der Firma Honeywell unter der Produktbezeichnung LUMILUX Grün CD 333 vertriebene Benzthiazolderivate erwiesen. Hierbei handelt es sich um eine pulvertörmige Substanz.

Die erfindungsgemäß einzusetzende fluoreszierende Substanz ergibt eine Markierung, die bei Tageslicht für das bloße Auge unsichtbar ist, und erst durch Bestrahlung mit UV-Licht sichtbar wird. Für die Bestrahlung kann eine handelsübliche UV-Lichtquelle verwendet werden.

Zur Herstellung des Mittels wird die fluoreszierende Substanz in dem Lösungsmittel gelöst. Geeignete Lösungsmittel sind Lösungsmittel, die die Lackoberfläche soweit anlösen können, dass sich die fluoreszierende Substanz mit dem Lack verbinden kann.

Beispiele für geeignete Lösungsmittel ist eine Nitroverdünnung oder Aceton oder ähnliche Lösungsmittel oder auch Mischungen davon. Insbesondere bevorzugt ist eine Nitroverdünnung, wobei eine beliebige handelsübliche Nitroverdünnung eingesetzt werden kann.

Vorteilhafterweise liegt die fluoreszierende Substanz in dem Lösungsmittel im Wesentlichen gesättigt vor.

Es versteht sich, dass auch geringere Konzentrationen eingesetzt werden können, solange die entstehende Markierung eine ausreichende Intensität aufweist.

Beim Aufbringen auf die lackierte Oberfläche löst das Lösungsmittel die lackierte Oberfläche an, und die fluoreszierende Substanz kann sich mit dem Lack der Oberfläche verbinden. Nach der Ausbildung der Markierung kann überflüssiges Mittel entfernt werden, sofern sich das Lösungsmittel nicht bereits von selbst verflüchtigt hat.

Zur Ausbildung einer Markierung mit der gewünschten Intensität, sollte das Mittel ausreichend lange auf die lackierte Oberfläche einwirken. Die Einwirkzeit hängt hierbei auch von der Konzentration des Mittels an fluoreszierender Substanz an. Im Allgemeinen verkürzt sich die Einwirkzeit bei höher konzentrierten Lösungen, da eine Markierung mit gewünschter Intensität bereits nach kürzerer Zeit ausgebildet ist.

Naturgemäß beeinflusst auch die Art des Lackes die Einwirkzeit. Je nach Lackqualltät kann diese länger oder kürzer sein, je nachdem inwieweit das Lösungsmittel den Lack soweit anzulösen vermag, dass sich die fluoreszierende Substanz mit dem angelösten Lack verbinden kann. Die Bestimmung einer geeigneten Einwirkzeit ist jedoch ohne Weiteres auch für Laien möglich.

Es hat sich herausgestellt, dass im allgemeinen geeignete Einwirkzeiten bei ca. 20 - 36 Stunden liegen.

Als vorteilhaft hat sich für die Aufbringung der Markierung die Anwendung einer Schablone erwiesen. Diese Schablone weist eine Lochung auf, die der aufzubringenden Markierung entspricht

Für die Aufbringung der Markierung wird die Schablone an der Stelle der lackierten Oberfläche aufgebracht, die mit der gewünschten Markierung versehen werden soll. Anschließend wird das erfindungsgemäße Mittel satt auf die gelochten Stellen der Schablone aufgebracht und einwirken gelassen.

Die Schablone dient einerseits dazu, eine Markierung in einem gewünschten Muster aufzubringen und andererseits stellt die Verwendung der Schablone sicher, dass das flüssige Mittel über die Einwirkzeit an Ort und Stelle gehalten wird und nicht verläuft.

Die Schablone kann aus einem beliebigen lösungsmittelresistenten Material bestehen.
Auch die Lochung kann nach beliebigen Verfahren erfolgen. Beispielsweise kann für das Vorsehen einer Lochung mit einem bestimmten Muster, zum Beispiel mit einer bestimmten Nummer, ein Beschriftungslaser eingesetzt werden.

Gemäß einer bevorzugten Ausführungsform ist die Schablone als Aufkleber ausgestaltet, wobei die auf der lackierten Oberfläche aufliegende Seite mit einer Klebeschicht versehen ist.

Für die Aufbringung kann dann die Schablone einfach auf die lackierte Oberfläche aufgeklebt werden, mit dem Mittel bestrichen werden, und nach ausreichender Einwirkzeit wird die Schablone von der Oberfläche entfernt. Gegebenenfalls, falls erforderlich, kann zur Entfernung von möglichen Kleberückständen nachpoliert werden. Da sich die Markierung dauerhaft mit der lackierten Oberfläche verbindet, wird die Markierung durch Polieren nicht beeinträchtigt.

Das Auftragen des erfindungsgemäßen Mittels zur Markierung kann mit einer beliebigen Vorrichtung erfolgen. Beispiele sind Pinsel und Stifte.
Vorzugsweise wird ein befüllbarer Stift verwendet Derartige Stifte sind an sich bekannt.
Als besonders geeignet haben sich Stifte mit weicher Spitze, wie einer Filzspitze erwiesen. Die Stifte sollten eine ausreichende Dichtigkeit aufweisen, sodass sich das Lösungsmittel des erfindungsgemäßen Mittels auch bei längerer Lagerzeit nicht vorzeitig verflüchtigt.

Die vorliegende Erfindung umfasst auch ein Kit zum Auftragen einer Markierung auf eine lackierte Oberfläche. Das Kit enthält einen befüllbaren Stift, der gegebenenfalls bereits mit dem erfindungsgemäßen Mittel befüllt sein kann, eine Schablone mit einem eingelochten Muster wie einer Nummer, wobei die Schablone auf der Seite mit der sie auf die lackierte Oberfläche aufgelegt wird, mit einer Klebeschicht versehen sein kann, so dass die Schablone auf der lackierten Oberfläche aufgeklebt werden kann, sowie das erfindungsgemäße fluoreszierende Mittel.
Das fluoreszierende Mittel kann hierbei bereits angemischt vorliegen oder dem Kit können die einzelnen Komponenten des fluoreszierenden Mittels zum Selbstanmischen beigelegt werden. In diesem Fall enthält das Kit einen Behälter mit dem Lösungsmittel, zum Beispiel einer Nitroverdünnung, sowie einen Behälter mit der fluoreszierenden Substanz.

Das Auftragen der Markierung auf eine gewünschte lackierte Oberfläche wird nachfolgend am Beispiel eines Mittel mit Nitroverdünnung als Lösungsmittel näher erläutert.

Die Nitroverdünnung wird mit dem fluoreszierenden Pulver wie z. B. LUMILUX Grün CD 333 in einem gewünschten Verhältnis vermischt. In einer geeigneten Mischung wird zum Beispiel 0,5 g fluoreszierendes Pulver mit 10 ml Nitroverdünnung gemischt.

Dann wird der befüllbare Stift mit der fluoreszierenden Lösung befüllt.

Die Schablone mit dem gewünschten Muster wird auf die lackierte Oberfläche geklebt und mit dem Stift satt bestrichen.

Die Reaktion ist nach einer Einwirkzelt von ca. 20 bis 36 Stunden abgeschlossen und das Muster ist unsichtbar und dauerhaft auf den Lack übertragen. Nach Entfernen der Schablone ist das Muster nur noch unter UV-Licht erkennbar.

Die vorliegende Erfindung eignet sich insbesondere zur unsichtbaren permanenten Markierung von lackierten Oberflächen von Fahrzeugen wie Kraftfahrzeugen, Rädern etc.
Sie kann problemlos auch von Laien aufgetragen werden.

## Patentansprüche

1. Permanente Markierung zur Kennzeichnung von lackierten Oberflächen,
wobei die Markierung durch eine fluoreszierende Substanz gebildet ist, die sich mit dem Lack verbindet, und die Markierung bei Tageslicht unsichtbar ist und durch Bestrahlung mit UV-Licht sichtbar wird.

2. Mittel zur Aufbringung der permanenten Markierung gemäß Anspruch 1 auf eine lackierte Oberfläche,
wobei das Mittel eine Lösung ist, in der die fluoreszierende Substanz in - einem Lösungsmittel gelöst vorliegt, wobei das Lösungsmittel ein Lösungsmittel ist, das mit dem Lack unter Anlösen reagiert.

3. Mittel nach Anspruch 2,
**dadurch gekennzeichnet,**
**dass** das Lösungsmittel ausgewählt ist unter einer Nitroverdünnung und Aceton.

4. Mittel nach Anspruch 2 oder 3,
wobei die Lösung eine gesättigte Lösung der fluoreszierenden Substanz ist.

5. Kit zum Aufbringen einer permanenten Markierung gemäß Anspruch 1 auf eine lackierte Oberfläche umfassend einen befüllbaren Stift, eine Schablone mit einer Lochung in Form der gewünschten Markierung und ein Mittel nach einem der Ansprüche 2 bis 4.

6. Kit nach Anspruch 5,
wobei die Schablone auf der Seite mit einer Klebeschicht versehen ist, mit der sie auf die zu markierende Oberfläche aufgelegt wird.

7. Kit nach Anspruch 5 oder 6,
wobei das Mittel in Form seiner Komponenten, einer fluoreszierenden Substanz und dem Lösungsmittel, zum Selbstanmischen vorliegt.

8. Verwendung eines Mittel nach einem der Ansprüche 2 bis 4 oder eines Kits nach einem der Ansprüche 5 bis 7 zum Aufbringen einer permanenten Markierung auf eine lackierte Oberfläche.

9. Verwendung nach Anspruch 8,
wobei die lackierte Oberfläche Teil eines Kraftfahrzeugs ist.
